# EUROPEAN PATENT SPECIFICATION

(11) **EP 4 045 797 B1**
(45) Date of publication and mention of the grant of the patent: **10.07.2024**
(21) Application number: 20807369.2
(22) Date of filing: 13.11.2020
(51) Int. Cl.: F03D 80/80

(54) **NACELLE FOR A WIND TURBINE**
GONDEL FÜR EINE WINDTURBINE
NACELLE DESTINÉE À UNE ÉOLIENNE

(30) Priority: 15.11.2019 DK PA201970699; 24.04.2020 DK PA202070252; 24.04.2020 DK PA202070253; 24.04.2020 DK PA202070254; 11.09.2020 DK PA202070588
(43) Date of publication of application: 24.08.2022
(73) Proprietor: Jupiter Bach A/S, 4600 Køge (DK)
(72) Inventor: RAIMUND, Ulrik, 4793 Bogø By (DK)
(74) Representative: Page White Farrer
(86) International application number: PCT/EP2020/082114
(87) International publication number: WO 2021/094571

(56) References cited:
- EP-A1- 3 247 899
- EP-B1- 3 247 899
- US-A1- 2005 230 979

## Description

The present invention relates to a nacelle for a wind turbine.

A wind turbine converts the kinetic energy in the wind into mechanical power by means of a rotor coupled to main machinery components. Wind turbines comes in various sizes ranging from small wind turbines to very large turbines, the majority of which are large threebladed horizontal-axis wind turbines (HAWT). The large wind turbines are high and have a very large numbers of main machinery component groups and subcomponents installed on a frame inside the nacelle cover. Wind turbines from different manufacturers have different frames and arrangements of machinery to fit inside the various designs of composite nacelle cover, which designs have an impact on the arrangement of the machinery as well.

One of the largest components located inside the nacelle cover of a wind turbine is the load-carrying frame, which is also known to be one of the most critical components of the wind turbine. The load-carrying frame typically consists of a rear frame part, a front frame part, and optionally a generator frame part, which frame parts are installed in the nacelle cover to carry and support many of the components and machinery that transform the wind's kinetic energy conferred to the rotor into mechanical energy to turn a generator that produces electric power. The components and machinery are hitherto installed on the load-carrying frame, which is then lifted into the nacelle cover, secured to the nacelle cover and aligned with the rotor to be put in operative condition to gain electric power. The front frame part and the optional general frame part may be referred to as the bed plate frame and the rear frame part may be referred to as the main frame.

The load-carrying frame is typically a cast steel frame or a steel frame bolted together, and thus very heavy, and expensive to manufacture. Moreover, said load-carrying frame must be subjected to expensive quality control and non-destructive testing. The load-carrying frame are also expensive, strenuous, and time-consuming to transport to the erection site, as well as to lift into the nacelle cover with the components and machinery supported on the load-carrying frame, as dealt with in US-B-7793964 and EP-A-3246561, respectively.

EP-A-3247899 discloses a wind turbine nacelle configured for mounting on a wind turbine tower and for supporting a rotor assembly, the nacelle comprising at least a first and a second nacelle module. The first nacelle module comprises a first frame structure and a main bearing system for a main shaft of the rotor assembly, and the second nacelle module comprises a second frame structure and a drive train system for the wind turbine. When the nacelle is mounted on the wind turbine tower, the main bearing system is supported by the wind turbine tower, and the drive train system is attached to the main bearing such that the weight of the drive train system is transferred to the main bearing system and thereby to the wind turbine tower. Further, the first frame structure is configured to support the main bearing system during transportation and prior to mounting of the nacelle, and the second frame structure is configured to support the drive train system during transportation and prior to mounting of the nacelle, and the first and second frame structures form a load carrying structure of a first and a second shipping freight container such that the first and second nacelle module can be transported as shipping freight containers. When the nacelle is mounted on the wind turbine tower, the first and second frame structures may be placed side by side in a direction along a rotational axis of the wind turbine rotor and may be oriented such as to have a length extending transversely to a rotational axis of the wind turbine rotor.

US-A-2005/230979 discloses a wind turbine is provided that minimizes the size of the drive train and nacelle while maintaining the power electronics and transformer at the top of the tower. The turbine includes a direct drive generator having an integrated disk brake positioned radially inside the stator while minimizing the potential for contamination. The turbine further includes a means for mounting a transformer below the nacelle within the tower.

In a typical wind turbine, the hub is secured to the front of the nacelle cover with the blades directly bolted to the hub, or bolted to the hub via a pitch bearing. The yaw system, mainshaft bearing, gearbox, generator, transformer and electrical control cabinets are behind the hub and conventionally mounted on the front frame of the nacelle.

The load-carrying frame can e.g. be made as two heavy main cast and/or welded steel parts, wherein e.g. the yaw system, main shaft, and optionally the gearbox, are secured to the front frame part, and the transformer, and electrical cabinets are secured to the rear frame part. The generator can conventionally be secured to any of the front frame part and the rear frame part. Once the yaw system passes its rotational test and its motors are installed and pass their functional tests, the front frame part and rear frame part are joined by heavy bolts. The entire load-carrying frame assembly with its machinery and other components is then attached by brackets to the walls of the fiber-reinforced composite nacelle cover.

EP-A-2322795 describes an example of a load-carrying frame installed in a nacelle cover.

A load-carrying frame is thus disposed within the nacelle cover to carry and support the main machinery components of the wind turbine using a plurality of brackets mounted at an upper and a lower portion of the load-carrying frame to secure the load-carrying frame to the nacelle inner.

The wind industry is always in demand of ways to reduce productions costs and to improve the ways a wind turbine is produced, so it is a main aspect of the present invention to reduce productions costs of a wind turbine.

There is also a continuing need to reduce the carbon footprint of engineered structures and to enhance the sustainability of any engineering development, for example the installation of wind turbines.

In yet an aspect is provided a wind turbine, for which the amount of steel for manufacturing the load-carrying frame can be reduced.

In yet an aspect is provided a nacelle having a substantially smaller, typically substantially shorter load-carrying frame than the interior length of the composite nacelle cover.

In yet an aspect is provided a nacelle, which is less heavy than hitherto known.

In one aspect, the present invention provides a nacelle for a wind turbine, wherein the nacelle comprises a nacelle cover formed by an elongate housing defining an interior space containing machinery components of the wind turbine, the housing having a front end mounted to a tower of the wind turbine, and an opposite rear end, wherein the elongate housing comprises a fibre-reinforced polymer composite material, **characterised in that** in that the front end of the housing is mounted on a bed plate frame which is affixed to the tower, the front end is fitted to the bed plate frame by at least one fitting assembly, a main frame is fixed to the bed plate frame and extends in a longitudinal direction along the housing towards the rear end, the main frame supports at least one part of a drive train of the wind turbine, the housing supports at least one machinery component of the wind turbine which is mounted on the housing at the rear end, the housing comprises a structural tube which functions as a vertically displaceable cantilever beam carrying the load of the at least one machinery component mounted thereon, and the nacelle further comprises a brace device affixed between the main frame and a part of the housing for reinforcing the part of the housing against lateral displacement of the housing relative to the main frame.

Preferred or optional features are defined in dependent claims 2 to 15.

Thus at least some of the machinery and operative components of the wind turbine that converts the kinetic energy of the wind into electrical power are installed inside the composite nacelle cover by being secured directly or indirectly to the composite wall of the composite nacelle cover, e.g. by means of brackets and bolts, and only a first part of main machinery components are supported on a load-carrying frame. Some of the main machinery components located towards the rear end of the nacelle cover can be secured directly or indirectly to the composite wall of the composite nacelle cover, the composite wall including one or more of the sidewalls, floor or roof of the composite nacelle cover, at selected securing points and locations. In other words the composite nacelle cover has at least one main machinery component secured to the composite wall of said composite nacelle cover instead of to a load-carrying frame.

Within the scope of the present invention the term "nacelle cover" is understood to mean the part of the wind turbine that houses the main machinery, and to which the rotor are mounted at a front end. Typically the composite nacelle cover has a bottom hole that is aligned with a hole in a bed plate at the top of the tower. The hole in the bed plate is correspondingly aligned with a hole at the top of the tower, which typically is centrally located (plus a tolerance) with respect to the external dimensions of the top of the tower.

Within the scope of the present invention the term "composite" means a made from two or more constituent materials with significantly different physical or chemical properties that, when combined, produce a material with characteristics different from the individual components. The "composite" preferably include a polymer matrix reinforced with fibers. Fibre-reinforced polymers may be thermosetting polymers, e.g. carbon-fibre-reinforced polymer (CFRP) and glass-reinforced plastic (GRP). The plastic composite may be used in a laminate having a core, such a foam core, e.g. a polyurethane foam core of a honeycomb structure, sandwiched between opposite composite face skins, thereby providing thickness and structural strength to the laminate, and thus to a wall of a composite nacelle cover made of such laminate.

Within the scope of the present invention the term "bed plate" or "bed plate frame" means the transition piece of the load-carrying frame located inside the composite nacelle cover and connecting the main bearing(s), the shafts, the generator, and optionally the gearbox if present, towards the rotor at one side, and the yaw bearing towards the tower on the other side. The terms "bedplate" and "bed plate frame" are used interchangeably in the following description.

Within the scope of the present invention the term "main machinery components", "main components", and "machinery" are used interchangeably for the components including but not limited to the main support, yaw system, brakes, cooling system, transformer, current converter and current inverter, computer, electrical control cabinets, and the drive train including the low-speed shaft (main shaft), the gearbox, the high-speed shaft, shaft bearings, and the generator.

The composite housing constitutes a first load-carrying structure for the main machinery component(s) which are secured to the composite wall of the composite nacelle cover. By securing some of the main machinery components to the composite wall of the composite nacelle cover, e.g. to the floor and/or sides and/or roof of the composite nacelle cover, instead of to a load-carrying frame, a lot of heavy steel for manufacturing said load-carrying frame can be dispensed with, as well as costs and many man-hours for testing the conventionally long load-carrying frame can be saved.

The present invention uses a main frame fixed to the bed plate frame which together form a load-carrying frame for supporting at least one component of the main machinery components of the wind turbine. The load-carrying frame constitutes a second load-carrying structure for the main machinery components not being secured to the composite wall of the composite nacelle cover. It is however preferred to support as few components of the second part of the main machinery components as possible on the load-carrying frame, and instead utilize the composite nacelle cover wall as a primary load-carrying structure.

The composite nacelle cover can be a fibre-reinforced polymer composite nacelle cover, preferably a fiber-reinforced composite nacelle cover having opposite fibre-reinforced polymer face skins laminating a foam core, i.e. a sandwich construction as is well known in the art of composite materials. The fibre-reinforced composite may comprise glass fibre, carbon fibre, natural fibre or any other suitable fibre; the polymer resin to form the matrix may comprise a thermoplastic or thermosetting resin, for example an epoxy resin or a vinylester resin. Any suitable fibre-reinforced resin matrix polymer composite material known for use in manufacturing wind turbines may be used.

Metal nacelle covers are explicitly excluded, and do not form part of the present invention. Drilling holes for brackets for securing of main machinery components in a metal nacelle wall provides a basis and a path for rust formations and corrosive attack due to humidity always present in the surroundings. Expensive precautionary provisions, actions and processes are required to avoid these consequences, such as additional post processes, such as painting and frequent shifting of many bolts and brackets, as well as extra surveillance to observe consequences early. Also metal, e.g. steel, nacelle covers can suffer from fatigue problems. Thus metal nacelle covers are not appropriate for the present invention.

The part of the load-carrying frame that constitutes the second load-carrying structure can be at least a front part of the main frame, or the entire main frame, and all or part of the bed plate frame. The second load-carrying structure can support machinery components which are part of the drive train, optionally also the yaw system or a part of the yaw system. The length of the main frame can be reduced compared to conventional main frames, and still provide sufficiently safe and strong support, as just a part of the entire load-carrying structure, still keeping e.g. the drive train properly aligned.

In accordance with the present invention in the nacelle cover no rear frame is provided, i.e. no metal frame is located at the rear end of the composite housing. The main frame is fixed rearward of the bearing plate frame, and extends rearwardly but terminates a sufficient distance from the rear end of the housing to permit machinery component(s) to be fitted to the composite housing rearwardly of the main frame. This reduces the weight of the metal frame required to support the machinery component(s) as compared to known metal frames.

Within the scope of the present invention main machinery components can be implemented in a multiplicity of other kinds of composite nacelle covers using only a part of the total length of the load-carrying frame for said composite nacelle cover as compared to known load-carrying frames. The present invention is suited for both complex and simple composite nacelle cover designs. The present invention may reduce the overall length of the nacelle, and the nacelle may in the long view be made shorter due to the invention offers a better utilization of the interior space of the composite nacelle cover. This way the invention may save even further production costs for the wind energy industry.

Furthermore, the present invention may reduce the width and/or height of the nacelle by achieving a better utilization of the interior space of the composite nacelle cover. The reduced width and/or height dimensions can significantly reduce transport costs for transporting an assembled nacelle cover to an installation site.

In a typical embodiment of the present invention, the main machinery components secured to the composite housing, acting as a first load-carrying structure, may be one or more of the transformer, cooling system and/or the electrical control cabinet(s). Additional components, such as a crane for lifting machinery components into or out of the composite housing, may be secured to the composite housing.

The main machinery components to be supported by the composite housing can be lifted separately and quickly into the nacelle cavity as individual main machinery component(s), which process of course is less heavy and complicated than when lifting the combined installation of all main machinery components pre-mounted on a single enlarged load-carrying frame. Once inside the composite nacelle cover, each component of the main machinery components can subsequently be secured to the wall of the composite nacelle cover. The main machinery components of the wind turbine that are fitted to at least a part of the load-carrying frame can be lifted in conventional manner inside the composite nacelle cover, but this assembled structure is still much less heavy and easier to lift than if a fully equipped load-carrying frame is lifted.

In conventional wind turbines all parts of main machinery components are lifted in common on a load-carrying frame, which put a high demand on the ways the parts must be secured to the load-carrying frame in order not to displace to any extent at all in relation to each other, or drop off the load-carrying frame during lifting. When fewer parts of main machinery need to be lifted in common the lifting process is less vulnerable to failure and wind influences. A separate component of the first part of main machinery components only needs to be secured to the load-carrying composite nacelle cover wall at few points.

The invention also provides freedom to install individual components on other positions inside the composite nacelle cover than previously defined and dictated by the conventional load-carrying frame composed of both a bed plate frame and a main frame. Thus the interior positioning arrangement of main machinery components, and the design of said arrangement, can, provided that the mechanical interaction of main machinery components allow it and is not affected or destroyed, be customized and targeted for each customer and each nacelle design, and easily changed if the demand and possibility arises.

The size of the load-carrying frame can, when used in a composite nacelle cover, be reduced substantially compared to conventional configurations of load-carrying steel frames for conventionally known wind turbine machinery, this way saving a lot of weight. Thus reducing the size, in particular the length, of the load-carrying frame, e.g. by elimination of the main frame, does not only save amounts of steel, the transport costs are also reduced, as well as lifting costs, testing costs, and work time costs. Furthermore, utilization of the interior space of the composite nacelle cover can be optimized and utilized the best possible way.

The load-carrying frame of the composite nacelle cover of the present invention may in accordance with the present invention have a front frame part (a bed plate frame), and only a part of a rear frame part (main frame).

The front frame part can be a steel structure or be manufactured of fiber-reinforced composite.

In a preferred embodiments a main machinery component that is not supported onto a load-carrying frame part as the load-carrying structure can simply be secured directly to the wall of the composite nacelle cover by means of securing means, such as bolts and brackets, optionally in combination with an adhesive, and preferably secured at wall points being predetermined by calculations based on models and tests to be particular strong securing points. Thus securing main machinery components to the wall of the composite nacelle cover provides options for securing said main machinery component.

A 3-Dimensional structure of composite nacelle cover that is especially for carrying the load of the machinery components may have substantially flat and straight walls, thus walls without any substantially curving. Optionally such a composite nacelle cover may have a substantially rectangular appearance with a substantially square cross-section.

The present invention also relates to a wind turbine comprising a tower and a nacelle at the top of the tower. The wind turbine comprises the composite nacelle cover described above and being equipped with main machinery component(s) secured to the wall of the composite nacelle cover without using a load-carrying frame, thereby substantially reducing overall weight of the nacelle and making the installation of the main machinery components fast and easy. The composite nacelle cover may be secured directly to the top of the tower.

As an example within the scope of the present invention it is intended to reduce the length of the conventional load-carrying frame, typically weighing about 25 tons, by at least about one third.

The invention will now be described by way of example only with references to the accompanying drawings, in which
Figure 1 is a schematic perspective side view from above of a nacelle cover for a wind turbine in accordance with an embodiment of the present invention;
Figure 2 is a schematic cross-sectional side view along line A-A of the nacelle cover of Figure 1 and the interior structure and machinery therein;
Figure 3 is a schematic plan view from above of the nacelle cover of Figure 2 and the interior structure and machinery therein;
Figure 4 is an enlarged schematic cross-sectional view along line B-B illustrating in greater detail the brace device between the floor and the main frame of the nacelle cover shown in Figure 1; and
Figure 5 is a schematic side view of a fitting assembly for fitting the nacelle cover of Figure 1 to a bed plate frame of a wind turbine.

When a main machinery component, whether it being the first part, the second part or both said parts, is secured to a side wall of the composite nacelle cover this should not be construed as limiting the scope of the present invention. Such a component could quite as well be secured to the floor, end walls, or even to the roof, although not to the hatch.

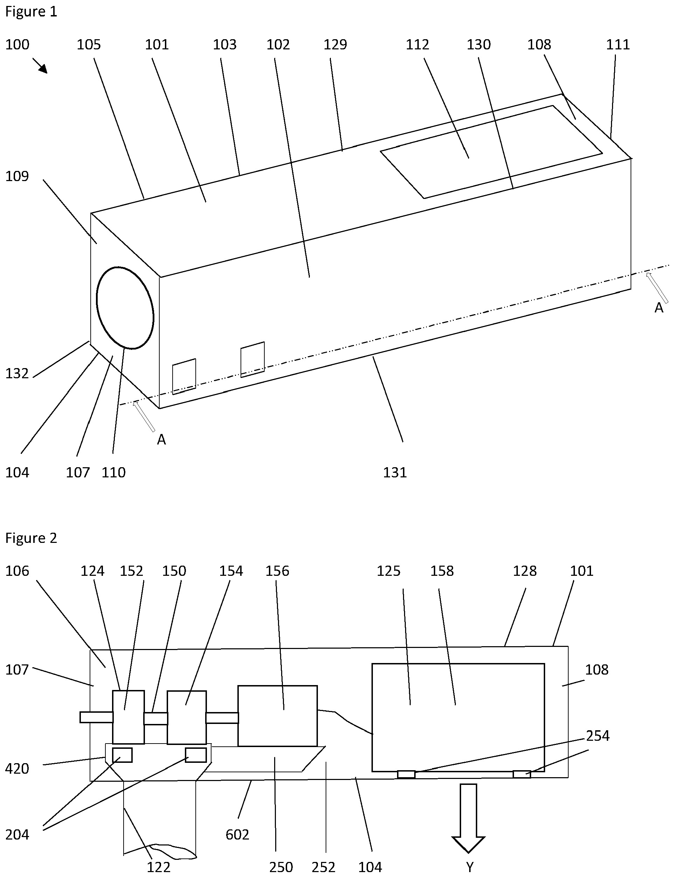

Referring to Figures 1 to 5, there is schematically illustrated a nacelle cover 100 for a wind turbine in accordance with an embodiment of the present invention. In Figures 1 to 5, the dimensions of the various structural features are not to scale and are illustrated in an exaggerated form for clarity of illustration. Also, for clarity of illustration only Figure 2 shows the machinery components of the wind turbine.

The nacelle cover 100 comprises a roof 101, opposite sidewalls 102, 103 and a floor 104 assembled together to form a composite material elongate housing 105 defining an interior space 106. The interior space 106 in use contains machinery components of the wind turbine. For example, in a typical wind turbine, the hub (not shown) is secured to the front end 107 of the nacelle cover 100 with the blades directly bolted to the hub, or bolted to the hub via a pitch bearing. In the embodiment of the present invention, the yaw system, mainshaft bearing, gearbox, generator, transformer and electrical control cabinets are behind the hub and mounted within the nacelle cover 100.

The housing 105 has a front end 107 for mounting to a tower (not shown) of the wind turbine (not shown), and an opposite rear end 108. A front end wall 109, preferably flat, is illustrated as being vertical but may be upwardly inclined and has a front hole 110 for securing the rotor (not shown) of the wind turbine. A rear end wall 111 closes the rear end 108. In the illustrated embodiment the rear end wall 111 is vertical, but may have any other desired shape and configuration.

The roof 101 is typically provided with one or more detachable panels 112 to enable the panels to be removed temporarily after installation of the wind turbine when it is required to replace any of the machinery components mounted within the nacelle cover. It is conventional to use a crane to access the interior space 106 via the roof 101 by removing one or more detachable panels 112 from the roof 101.

The floor 104 has a bottom hole 113 for securing the nacelle cover 100 in accessible communication with the tower 122 of the wind turbine to provide access to the interior space 106 of the nacelle cover 100 from the tower.

Each of the roof 101, the opposite sidewalls 102, 103 and the floor 104 comprise a fibre-reinforced polymer composite material. Preferably, each of the front end wall 109 and the rear end wall 111 also comprise a fibre-reinforced polymer composite material.

Each of the roof 101, the opposite sidewalls 102, 103 and the floor 104 comprise a respective wall element comprising an assembly of a plurality of panels which have been joined together to form a respective elongate row of panels. Preferably, each of the front end wall 109 and the rear end wall 111 also comprise an assembly of a plurality of panels comprised of a fibre-reinforced polymer composite material. Each panel comprises fibre-reinforced polymer composite material, and typically comprises a planar wall part reinforced by structural beams affixed to or integral with the planar wall part.

In one embodiment, the composite nacelle cover 100 may have a panel structure as disclosed in the Applicant's WO-A-2019/034214 in which each wall element comprises an assembly of plural sandwich panels comprising opposite skins of fibre-reinforced polymer composite material laminated to a foam core.

In the illustrated embodiment, the opposite sidewalls 102, 103 are flat, but may be threedimensionally shaped. The roof 101 may be flat or upwardly bowed about a radius of curvature within the range of from infinity to 16 m. An upwardly bowed surface assists run-off of rain and sliding of snow from the roof 101 to minimise excess snow loads on the nacelle cover 100 during winter weather conditions. The floor 104 is flat, or alternatively downwardly bowed about a radius of curvature within the range of from infinity to 16 m.

In accordance with the present invention, the front end 107 of the housing 105 is mounted on a bed plate frame 420. The bed plate frame 420 is affixed to the tower 122 as is conventional to those skilled in the art of wind turbine manufacture and construction. The front end 107 is fitted to the bed plate frame 420 by at least one fitting assembly 204. In the illustrated embodiment, there are four fitting assemblies 204, comprised of two fitting assemblies 204 longitudinally spaced along a respective sidewall 102, 103.

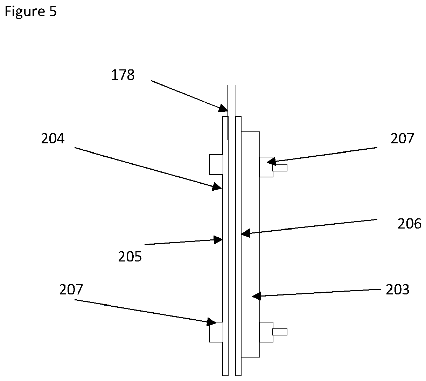

As shown in Figure 5, each sidewall 102, 103 is mounted on a respective metal foundation plate 203 of the bed plate frame 420 by each respective fitting assembly 204.

The fitting assembly 204 comprises a pair of outer and inner washer plates 205, 206 of metal which sandwich the bracket region 178 of the sidewall 102, 103 therebetween. The foundation plate 203 is disposed adjacent to the inner washer plate 206. A plurality of threaded bolt and nut fittings 207 bolt together the outer washer plate 205, a reinforced bracket region 178 of the sidewall 102, 103, the inner washer plate 206 and the foundation plate 203. Typically, the outer and inner washer plates are each adhered to the respective outer and inner surfaces 207, 208 of the bracket region 178 by a respective adhesive layer (not shown). Typically, the outer and inner washer plates 205, 206 are each comprised of steel having a thickness of from 3 to 50 mm.

The bed plate frame 420 supports at least one part of a drive train 124 of the wind turbine, the drive train being shown highly schematically by a box in Figure 2.

A main frame 250 is fixed to the bed plate frame 420 and extends in a longitudinal direction along the housing 105 towards the rear end 108. The main frame 250 also supports at least one part of the drive train 124 of the wind turbine.

The main frame 250 comprises a pair of beams 640, 642, typically steel I-beams, which extend from the bed plate frame 420 in the longitudinal direction and are spaced from each other in a transverse direction orthogonal to the longitudinal direction. Each beam 640, 642 has a free end 644 which is longitudinally spaced from both the front end 107 and the rear end 108. Accordingly, the main frame 250 extends partly along the length of the housing 105 and terminates, for example, at a central part 252 of the housing 105. The beams 640, 642 may be reinforced by one or more transverse steel struts (not shown). The main frame 250 may be fixed to the bed plate frame 420 by any suitable fixing mechanism, such as by welding or by bolts (not shown).

The housing 105 supports at least one machinery component 125 of the wind turbine which is mounted on the housing 105 at the rear end 108. The free ends 644 of the beams 640, 642 of the main frame 250 are located nearer to the front end 107 of the housing 105 than the at least one machinery component 125 of the wind turbine, i.e. the at least one machinery component 125 is not supported by the main frame 250.

At least one machinery component 125, again shown highly schematically by a box in Figure 2, may be mounted on the inner surfaces of the opposed sidewalls 102,102 of the housing 105 at a position laterally spaced from the main frame 250 in a longitudinal direction along the housing 105. The at least one machinery component 125 is part of, or mechanically and/or electrically connected to, the drive train 124.

Figure 2 shows schematically the mainshaft 150, mainshaft bearing 152, gearbox 154, generator 156 and transformer 158, although other components, i.e. the yaw system are provided.

For some wind turbines, the various machinery components are pre-assembled on the ground prior to the pre-assembly being installed within the nacelle cover after the nacelle cover has been fitted to the top of the tower. However, on some bigger wind turbines, the individual drivetrain components, for example the mainshaft, and gearbox, may often be individually installed into the nacelle cover after the nacelle cover is lifted to the top of the tower, since the final assembly may be too heavy to be carried by the crane.

In a typical embodiment of the present invention, the mainshaft bearing 152, the gearbox 154 are mounted on the bed plate frame 420, and the generator 156 is mounted on the main frame 250. The yaw system may be mounted to the bed plate frame 420. In contrast, the transformer 158, optional cooling system (not shown) and electrical control cabinets (not shown) are mounted, directly or indirectly, to the sidewalls 102, 103 within the nacelle cover 100 as described in greater detail hereinbelow. However, other arrangements of which machinery components are mounted on the bed plate frame 420, the main frame 250 and the sidewalls 102, 103 may be employed.

In the preferred embodiment of the present invention, the machinery component that is typically located the furthest rearmost distance from the front end 107 of the nacelle housing 105, e.g. the transformer 158, is mounted on the sidewalls 102, 103. Typically, the machinery component(s) 125 mounted on the sidewalls 102,103 have a total mass of up to 10 tonnes. Such a mass exerts a high turning moment from the combined mass of the housing 105 and the machinery component(s) 125 on the fixing of the housing 105 to the bed plate frame 420.

The machinery component(s) 125 may be directly mounted on the sidewalls 102, 103, using fitting mechanisms between the machinery component(s) and the sidewalls 102, 103. Alternatively, the machinery component(s) may be indirectly mounted on the sidewalls 102, 103, for example by using a reinforced area of the floor 104 which is fitted to the sidewalls 102, 103, a transverse an additional reinforced interior floor which is fitted to the sidewalls 102, 103, or a transverse support assembly which is fitted to the sidewalls 102, 103, for example transverse beams mounted between the sidewalls 102, 103, which is fitted directly to the sidewalls 102, 103, and mounting the machinery component(s) on the reinforced area of the floor 104, additional reinforced interior floor, or support assembly. In each of these constructions, which are schematically illustrated by one or more supports 254 shown in Figure 2, the mass and turning moment load of the machinery component(s) 125 are supported by the sidewalls 102, 103. Alternatively, one or more of these machinery component(s) may be indirectly mounted on the sidewalls 102, 103 by being mounted on the roof 101. Also, a crane (not shown) may be mounted on the roof 101.

The housing 105 comprises a structural tube 128 which functions as a vertically displaceable cantilever beam carrying the load, indicated by arrow Y, of the at least one machinery component 125 mounted thereon.

The at least one machinery component 125 is directly or indirectly mounted on the sidewalls 102, 103 of the housing 105 and the sidewalls 102,103 of the housing 105 directly or indirectly support the load of the at least one machinery component 125.

In contrast, the weight of the machinery component(s) 124 of the drive train mounted on the bed plate frame 420 and the main frame 250 is carried by, and transferred to the tower 122 by, the bed plate frame 420.

The machinery component(s) 125 that are mounted on the sidewalls 102,103 at a position laterally remote from the bed plate frame 420 have significant mass, typically a total of at least 1 tonne and up to 10 tonnes, or even up to 20 tonnes if these mounted machinery components include the transformer, and thereby exert a significant turning moment on the structural tube 128 which functions as a cantilever beam to support the load of the combination resulting from both the mass of the machinery component(s) 125 that are mounted on the sidewalls 102,105 and the mass of the portion of the housing 105 that is rearward of the tower 122.

The roof 101, opposite sidewalls 102, 103 and floor 104 are assembled at each longitudinally-extending corner 129, 130, 131, 132 of the housing 105 by at least one respective fixing mechanism (not shown) to form a structural joint at least partially along the respective longitudinally-extending corner 129, 130, 131, 132.

As a result of this construction, the opposite sidewalls 102, 103 comprise opposite load-bearing webs of the vertically displaceable cantilever beam to carry the turning moment load, of the housing 105 and the at least one machinery component 125 mounted on the housing 105, the turning moment being about the mounting to the bed plate frame 420. Furthermore, at least one or both of the roof 101 and floor 104 comprise a respective flange interconnecting the opposite load-bearing webs of the vertically displaceable cantilever beam. Accordingly, the vertically displaceable cantilever beam functions to support the vertical turning moment load in a manner similar to an I-beam, or a square hollow profile, with the opposite sidewalls 102, 103 functioning as opposite load-bearing webs and the roof 101 and/or the floor 104 functioning as flanges.

The structural tube 128 is thereby configured to resist a vertical load of at least 500kN, and a vertical bending moment of at least 3500kNm, applied to the housing 105 at a position laterally of the mounting between the front end 107 of the housing 105 and the bed plate frame 420 which is affixed to the tower 122.

In some embodiments, any of the roof 101, sidewalls 102, 103 and floor 104 may be provided with large openings covered by removable panels which can be temporarily opened to access the interior space 106. When such large openings are provided, the opposite wall element may be reinforced to enable that reinforced element to function as the flange of the respective cantilever beam. For example, when the roof 101 is provided with a large openable hatch to enable a crane to remove machinery components from the housing 105, the floor 104 may be reinforced to function as the flange for the vertically displaceable cantilever beam and/or the upper edges of the sidewalls 102, 103 may be reinforced to provide a respective top flange structure for each sidewall 102, 103. Furthermore, when one or more hatches are in a closed position, the hatches may enhance the strength and stiffness of the housing 105; in particular, the closed hatches may provide an increased snow load capability of the roof 101 of the housing 105.

Correspondingly, the roof 101 and floor 104 comprise opposite load-bearing webs of a horizontally displaceable cantilever beam to carry a lateral load, for example a wind load and/or a yawing load applied to the housing 105 about the mounting to the bed plate frame 420. Accordingly, the horizontally displaceable cantilever beam functions to support the horizontal turning moment resulting from an applied lateral wind load in a manner similar to an I-beam, or a square hollow profile, with the roof 101 and floor 104 functioning as opposite load-bearing webs and the opposite sidewalls 102, 103 functioning as flanges interconnecting the opposite load-bearing webs of the horizontally displaceable cantilever beam.

The structural tube 128 is thereby configured to resist a horizontal lateral load of at least 100kN, and a horizontal bending moment of at least 1200kNm, applied to the housing at a position laterally of the mounting between the front end 107 of the housing 105 and the bed plate frame 420 which is affixed to the tower 122.

Preferably, the structural joint along each longitudinally-extending corner 129, 130, 131, 132 has a shear strength of more than 120 kN/m.

Typically, the sidewalls 102, 103, and optionally each of the roof 101 and the floor 104, have an in-plane shear strength of from 25 to 40 N/mm² and an in-plane compression strength of from 200 to 250 N/mm². Furthermore, preferably the sidewalls 102, 103, and optionally each of the roof 101 and the floor 104, have a shear load strength of greater than 5 kN and a bending moment strength of greater than 6 kNm.

Accordingly, the housing 105 is structured to act as a vertical cantilever beam which carries the load of the machinery component(s) 125. This load can be sufficient to cause elastic deformation of the rear end 108 of the housing 105 in a downward direction. In addition, in winter snow can accumulate on the roof 101 to provide a significant additional snow load on the housing 105 which can cause elastic deformation of the rear end 108 of the housing 105 in a downward direction. The housing 105 needs to be able to flex downwardly relative to the bed plate frame 420 and the main frame 250 in order to be able to carry the load of the machinery component(s) 125 and any additional snow load.

Furthermore, the housing 105 is exposed to winds, which can apply a significant lateral (i.e. horizontal) load on the housing. The housing 105 is structured to act as a horizontal cantilever beam which carries the lateral wind load. This lateral load can be sufficient to cause elastic deformation of the rear end 108 of the housing 105 in a lateral (i.e. transverse) direction. The housing 105 needs to be able to flex laterally relative to the bed plate frame 420 and the main frame 250 in order to be able to carry the lateral wind load.

However, such lateral flexing can cause damage of the sidewalls if the sidewalls impact the main frame or the machinery components. Such flexing could be prevented entirely by strengthening the composite material walls, but this would significantly increase the weight and dimensions of the nacelle cover. Such flexing could also be accommodated by enlarging the width of the nacelle housing, but this would make the nacelle housing too bulky to transport and install. Such flexing could furthermore be avoided or minimised by directly mounting the sidewalls of the nacelle housing to a rear portion of the steel framework which is extended rearwardly towards the rear end of the housing; however, such a structure would require the rear portion of the steel framework to carry at least a part of the vertical turning moment load, which would in turn require the steel framework to use stronger and heavier steel, which would reduce the savings of steel, weight, cost and carbon footprint which can be achieved by nacelles in accordance with the preferred embodiments of the present invention.

The present inventor has accordingly devised a nacelle housing structure which can permit and accommodate lateral flexing of a composite material nacelle cover housing without increasing the weight or volume of the nacelle cover, or its material, assembly and installation costs, and without causing damage to the sidewalls of the housing as a result of impact or wear against an internal framework for supporting machinery within the nacelle cover. Moreover, the nacelle housing structure can permit and accommodate vertical flexing of the composite material nacelle cover housing, for example as a result of a snow load, without increasing the weight or volume of the nacelle cover, or its material, assembly and installation costs.

In accordance with the present invention, the nacelle cover 100 accordingly comprises a brace device 600 affixed between the main frame 250 and a part 602 of the housing 105 for reinforcing the part 602 of the housing 105 against lateral displacement of the housing 105 relative to the main frame 250.

In the illustrated embodiment, the brace device 600 is affixed between the main frame 250 and a lower part 602 of the housing 105 for reinforcing the lower part 602 of the housing 105 against lateral displacement of the housing 105 relative to the main frame 250. As described hereinbelow, the brace device 600 may be affixed between the main frame 250 and the floor 104.

However, in an alternative embodiment, which is not illustrated, the brace device 600 is affixed between the main frame 250 and an upper part of the housing 105 for reinforcing the upper part 602 of the housing 105 against lateral displacement of the housing 105 relative to the main frame 250. For example, the brace device 600 may be affixed between the main frame 250 and the roof 101.

The brace device 600 is positioned laterally spaced from the at least one fitting assembly 204 in the longitudinal direction towards the rear end 108. Preferably, the brace device 600 is affixed between the main frame 250 and the floor 104 of the housing 105, the floor comprising part of the lower part 602 of the housing 105. In alternative embodiments, the brace device 600 may be affixed between the main frame 250 and lower edges of the sidewalls 102, 103 of the housing 105.

The brace device 600 is flexible in a vertical direction and is elastically deformed when the housing 105 is vertically displaced by vertical movement of the rear end 108 relative to the front end 107.

Accordingly, the brace device 600 prevents or minimises lateral movement of the housing 105 but nevertheless does not significantly restrict vertical movement of the housing 105. This means that the volume, mass and cost of the housing 105 can be minimised for any given combination of machinery components 124, 125 to be located within the nacelle cover 100, while nevertheless accommodating high vertical and horizontal loads which may be applied to the nacelle cover 100 during a service life of many years.

By providing the brace device 600, the lateral or sideways movement of the housing 105 is restricted, which prevents the sidewalls 102, 103 impacting against the main frame 250, which would otherwise damage the composite material of the sidewalls 102, 103. Nevertheless, the brace device 600 is flexible in a vertical direction and so permits vertical movement of the housing 105, for example when a snow load is on the roof 101 of the housing 105.

Furthermore, the brace device 600 can function to dampen any lateral or sideways movement of the housing 105 relative to the main frame 250, and can therefore comprise a damping component within the nacelle.

If the brace device 600 was not provided, the housing 105 would have to be increased in width or reinforced, or the steel framework would need to be larger and heavier, to prevent the sidewalls 102, 103 impacting against the main frame 250, but these modifications would increase one or more of the volume, mass and cost of the housing 105.

Consequently, the provision of the brace device 600 achieves a low cost, low weight and low volume solution for the housing which enables the housing 105 to function as a structural tube 128 without inadvertent damage to the sidewalls 102, 103 during service caused by lateral wind loads.

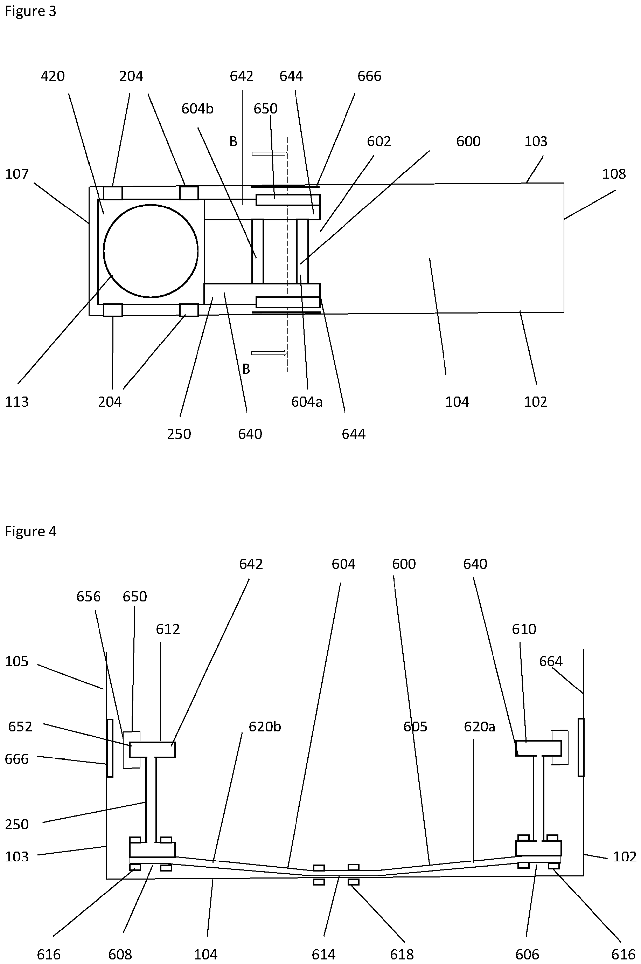

As shown in detail in Figure 4, the brace device 600 comprises an elongate spar 604 which has opposite ends 606, 608 which are affixed to respective opposite sides 610, 612 of the main frame 250 by fittings such as bolt fittings 616, and a central part 614 which is affixed to the floor 104 of the housing 105 by fittings such as bolt fittings 618. In the illustrated embodiment the elongate spar 604 comprises a fibre-reinforced polymer composite material; however it may be made of a polymer or metal, either as a metal bar, strip or wire, or other composite material.

The elongate spar 604 comprises a flexible sheet 605 which has high tensile strength, and thereby high stiffness, in a direction parallel to the plane of the sheet 605, and a high flexibility, and thereby low stiffness, in a direction orthogonal to the plane of the sheet 605.

First and second intermediate parts 620a, 620b of the elongate spar 604 are located between the central part 614 and a respective one of the opposite ends 606, 608. Each intermediate part 620a, 620b is flexible in a vertical direction and is elastically deformed when the housing 105 is vertically displaced by vertical movement of the rear end 108 relative to the front end 107.

Preferably, the brace device 600 comprises a pair of the elongate spars 604a, 604b which are spaced from each other in the longitudinal direction, as shown in Figure 3.

A shock absorber 650 is provided on an outer longitudinally- extending side 652 of each of the beams 640, 642. The shock absorber 650 is positioned inwardly of the housing 105 and spaced from an inner side surface 664 of the housing 105. The shock absorber 650 extends longitudinally and is shaped and dimensioned to fit to the respective beam 640, 642 so that the shock absorber 650 can protect the sidewall 102, 103 from impacting the respective beam 640, 642.

In the illustrated embodiment, each beam 640, 642 is shaped as an I-beam and the shock absorber 650 has a U-shaped cross-section to fit to an edge of the upper web 668 of the I-beam. However, the beams 640, 642 may have any other suitable structure to function as a main frame to support the desired machinery components and the shock absorber 650 may be correspondingly shaped and dimensioned to fit to the respective beam 640, 642.

When the housing 105 is deformed laterally by a distance higher than a predetermined distance, the side surface 664 engages the shock absorber 650. The shock absorber 650 comprises a body 656 of an elastomeric material which extends longitudinally along at least a part of the length of the respective beam 640, 642. The side surface 664 of each sidewall 102, 103 is covered by a metal plate 666 which can contact the shock absorber 650 prevent wear of the sidewall 102, 103.

Accordingly, the shock absorber 650 can function to avoid or minimise wear and deformation of the sidewalls 102, 103 in the event of lateral movement of the housing 105 relative to the main frame 250, in the event that the housing 105 is deflected laterally despite the presence of the brace device 600. The shock absorber 650 is preferably provided if the main frame 250, or machinery component(s) mounted on the main frame 250, are likely during service to be touched by the sidewalls 102, 103 when the sidewalls 102, 103 deform laterally. As the distance rearwardly along the housing 105 from the bed plate frame 420 increases, so correspondingly the deflection distance of the sidewalls 102, 103 increases for any given angle of lateral deflection. Consequently, for longer main frames 250, there is an increased likelihood that a shock absorber 650 would be installed on the outer lateral sides of the main frame 250 to minimise or prevent wear or deformation of the sidewalls 102, 103 by the main frame 250.

It is to be noted that in the figures the main machinery components are only shown schematically as examples. Furthermore no bolts or brackets are shown as securing means in the figures. It is however emphasized that such securing means are present. The composite nacelle cover shown in the figures is only one embodiment of a composite nacelle cover. Other designs of composite nacelle covers are within the scope of the present invention and the example shown in the figures is not exhaustive of the models and embodiments of composite nacelle covers that can implement and utilize the present invention. Also the designs of load-carrying frames shown in the figures are only examples, and load-carrying frames of multiple designs can be reduced in size, or be manufactured with reduced size for the purpose of the present invention.

## Claims

1. A nacelle for a wind turbine, wherein the nacelle (100) comprises a nacelle cover formed by an elongate housing (105) defining an interior space containing machinery components of the wind turbine, the housing (105) having a front end (107) mounted to a tower (122) of the wind turbine, and an opposite rear end (108), wherein the elongate housing (105) comprises a fibre-reinforced polymer composite material, **characterised in that** the front end (107) of the housing (105) is mounted on a bed plate frame (420) which is affixed to the tower (122), the front end (107) is fitted to the bed plate frame (420) by at least one fitting assembly (204), a main frame (250) is fixed to the bed plate frame (420) and extends in a longitudinal direction along the housing (105) towards the rear end (108), the main frame (250) supports at least one part of a drive train (124) of the wind turbine, the housing (105) supports at least one machinery component (125) of the wind turbine which is mounted on the housing (105) at the rear end (108), the housing (105) comprises a structural tube (128) which functions as a vertically displaceable cantilever beam carrying the load of the at least one machinery component (125) mounted thereon, and the nacelle (100) further comprises a brace device (600) affixed between the main frame (250) and a part (602) of the housing (105) for reinforcing the part (602) of the housing (105) against lateral displacement of the housing (105) relative to the main frame (250).

2. A nacelle according to claim 1, wherein the brace device (600) is positioned laterally spaced from the at least one fitting assembly (204) in the longitudinal direction towards the rear end (108).

3. A nacelle according to claim 1 or claim 2, wherein the brace device (600) is flexible in a vertical direction and is elastically deformed when the housing (105) is vertically displaced by vertical movement of the rear end (108) relative to the front end (107).

4. A nacelle according to any one of claims 1 to 3, wherein the brace device (600) is affixed between the main frame (250) and a lower part (602) of the housing (105) for reinforcing the lower part (602) of the housing (105) against lateral displacement of the housing (105) relative to the main frame (250), and optionally the brace device (600) is affixed between the main frame (250) and a floor (104) of the housing (105).

5. A nacelle according to any foregoing claim, wherein the brace device (600) comprises an elongate spar (604) which has opposite ends (606, 608) which are affixed to respective opposite sides (610, 612) of the main frame (250), and a central part (614) which is affixed to the floor (104) or roof (101) of the housing (105).

6. A nacelle according to claim 5, wherein the elongate spar (604) comprises a flexible sheet (605) which has high tensile strength, and thereby high stiffness, in a direction parallel to the plane of the sheet (605), and a high flexibility, and thereby low stiffness, in a direction orthogonal to the plane of the sheet (605).

7. A nacelle according to claim 5 or claim 6, wherein first and second intermediate parts (620a, 620b) of the elongate spar (604) are located between the central part (614) and a respective one of the opposite ends (606, 608), and each intermediate part (620a, 620b) is flexible in a vertical direction and is elastically deformed when the housing (105) is vertically displaced by vertical movement of the rear end (108) relative to the front end (107).

8. A nacelle according to anyone of claims 5 to 7, wherein the elongate spar (604) comprises a fibre-reinforced polymer composite material

9. A nacelle according to any one of claims 5 to 8, wherein the brace device (600) comprises a pair of the elongate spars (604a, 604b) which are spaced from each other in the longitudinal direction.

10. A nacelle according to any one of claims 1 to 9, wherein the main frame (250) comprises a pair of beams (640, 642) which extend from the bed plate frame (420) in the longitudinal direction and are spaced from each other in a transverse direction orthogonal to the longitudinal direction, and each beam (640, 642) has a free end (644) which is located nearer to the front end (107) of the housing (105) than the at least one machinery component (125) of the wind turbine.

11. A nacelle according to claim 10, wherein a shock absorber (650) is provided on an outer longitudinally- extending side (652) of each of the beams (640, 642), the shock absorber (650) being positioned inwardly of the housing (105) and spaced from an inner side surface (664) of the housing (105) such that when the housing (105) is deformed laterally by a distance higher than a predetermined distance, the side surface (664) engages the shock absorber (650).

12. A nacelle according to claim 11, wherein the shock absorber (650) comprises a body of an elastomeric material which extends longitudinally along at least a part of the length of the respective beam (640, 642).

13. A nacelle according to any one of claims 1 to 12, wherein the nacelle (100) comprises a roof (101), opposite sidewalls (102, 103) and a floor (104) assembled together to form the elongate housing (105), wherein each of the roof (101), the opposite sidewalls (102, 103) and the floor (104) comprises a fibre-reinforced polymer composite material, wherein the at least one said machinery component (125) is mounted on at least one support (254) comprising a reinforced area of the floor (104) which is fitted to the sidewalls (102, 103), a transverse reinforced interior floor which is fitted to the sidewalls (102, 103 or a transverse support assembly which is fitted to the sidewalls (102, 103), and thereby the said machinery component (125) is indirectly mounted on the sidewalls (102, 103) of the housing (105), and the sidewalls (102, 103) of the housing (105) indirectly support the load of the said machinery component (125).

14. A nacelle according to claim 13, wherein the least one machinery component (125) comprises a transformer (158) of the wind turbine which is directly or indirectly mounted on the sidewalls (102, 103) of the housing (105) at a position along the housing (105) laterally spaced from the main frame (250), and the sidewalls (102, 103) of the housing (105) directly or indirectly support the load of the transformer (158).

15. A nacelle according to claim 13 or claim 14, wherein the roof (101), opposite sidewalls (102, 103) and floor (104) are assembled whereby the opposite sidewalls (102, 103) comprise opposite load-bearing webs of the vertically displaceable cantilever beam to carry a vertical turning moment load, the turning moment being about the mounting to the bed plate frame (420), of the housing (105) and the at least one machinery component (125) mounted on the housing, and at least one or both of the roof (101) and floor (104) comprise a respective flange interconnecting the opposite load-bearing webs of the vertically displaceable cantilever beam, and the roof (101) and floor (104) comprise opposite load-bearing webs of a horizontally displaceable cantilever beam to carry a lateral load applied to the housing (105) about the mounting to the bed plate frame (420), and at least one or both of the opposite sidewalls (102, 103) comprise a respective flange interconnecting the opposite load-bearing webs of the horizontally displaceable cantilever beam.

## Patentansprüche

1. Gondel für eine Windturbine, wobei die Gondel (100) eine Gondelabdeckung aufweist, die durch ein längliches Gehäuse (105) gebildet wird, das einen Innenraum definiert, der Maschinenkomponenten der Windturbine enthält, wobei das Gehäuse (105) ein vorderes Ende (107), das an einem Turm (122) der Windturbine montiert ist, und ein gegenüberliegendes hinteres Ende (108) hat, wobei das längliche Gehäuse (105) ein faserverstärktes Polymerverbundmaterial aufweist, **dadurch gekennzeichnet, dass** das vordere Ende (107) des Gehäuses (105) auf einem Grundplattenrahmen (420) montiert ist, der am Turm (122) befestigt ist, das vordere Ende (107) am Grundplattenrahmen (420) durch wenigstens eine Montageanordnung (204) angebracht ist, ein Hauptrahmen (250) am Grundplattenrahmen (420) befestigt ist und sich in einer Längsrichtung entlang des Gehäuses (105) zum hinteren Ende (108) erstreckt, der Hauptrahmen (250) wenigstens einen Teil eines Antriebsstrangs (124) der Windturbine trägt, das Gehäuse (105) wenigstens eine Maschinenkomponente (125) der Windturbine trägt, die am hinteren Ende (108) am Gehäuse (105) montiert ist, das Gehäuse (105) ein Strukturrohr (128) aufweist, das als ein vertikal verschiebbarer Kragträger fungiert, der die Last der wenigstens einen daran montierten Maschinenkomponente (125) trägt, und die Gondel (100) ferner eine Verstrebungsvorrichtung (600) aufweist, die zwischen dem Hauptrahmen (250) und einem Teil (602) des Gehäuses (105) befestigt ist, um einen Teil (602) des Gehäuses (105) gegen eine seitliche Verschiebung des Gehäuses (105) relativ zum Hauptrahmen (2) zu verstärken.

2. Gondel nach Anspruch 1, wobei die Verstrebungsvorrichtung (600) in Längsrichtung zum hinteren Ende (108) seitlich beabstandet von der wenigstens einen Montageanordnung (204) positioniert ist.

3. Gondel nach Anspruch 1 oder Anspruch 2, wobei die Verstrebungsvorrichtung (600) in einer vertikalen Richtung flexibel ist und sich elastisch verformt, wenn das Gehäuse (105) durch vertikale Bewegung des hinteren Endes (108) relativ zum vorderen Ende (107) vertikal verschoben wird.

4. Gondel nach einem der Ansprüche 1 bis 3, wobei die Verstrebungsvorrichtung (600) zwischen dem Hauptrahmen (250) und einem unteren Teil (602) des Gehäuses (105) befestigt ist, um den unteren Teil (602) des Gehäuses (105) gegen eine seitliche Verschiebung des Gehäuses (105) relativ zum Hauptrahmen (250) zu verstärken, und optional die Verstrebungsvorrichtung (600) zwischen dem Hauptrahmen (250) und einem Boden (104) des Gehäuses (105) befestigt ist.

5. Gondel nach einem der vorhergehenden Ansprüche, wobei die Verstrebungsvorrichtung (600) einen länglichen Holm (604) aufweist, der gegenüberliegende Enden (606, 608) hat, die an jeweiligen gegenüberliegenden Seiten (610, 612) des Hauptrahmens (250) befestigt sind, und einen Mittelteil (614), der am Boden (104) oder Dach (101) des Gehäuses (105) befestigt ist.

6. Gondel nach Anspruch 5, wobei der längliche Holm (604) eine flexible Folie (605) aufweist, die in einer Richtung parallel zur Ebene der Folie (605) eine hohe Zugfestigkeit und dadurch eine hohe Steifigkeit, und in einer Richtung orthogonal zur Ebene der Folie (605) eine hohe Flexibilität und dadurch eine geringe Steifigkeit hat.

7. Gondel nach Anspruch 5 oder Anspruch 6, wobei erste und zweite Zwischenteile (620a, 620b) des länglichen Holms (604) zwischen dem Mittelteil (614) und jeweils einem der gegenüberliegenden Enden (606, 608) angeordnet sind, und jedes Zwischenteil (620a, 620b) in einer vertikalen Richtung flexibel ist und elastisch verformt wird, wenn das Gehäuse (105) durch vertikale Bewegung des hinteren Endes (108) relativ zum vorderen Ende (107) vertikal verschoben wird.

8. Gondel nach einem der Ansprüche 5 bis 7, wobei der längliche Holm (604) ein faserverstärktes Polymerverbundmaterial aufweist.

9. Gondel nach einem der Ansprüche 5 bis 8, wobei die Verstrebungsvorrichtung (600) ein Paar der länglichen Holme (604a, 604b) aufweist, die in Längsrichtung voneinander beabstandet sind.

10. Gondel nach einem der Ansprüche 1 bis 9, wobei der Hauptrahmen (250) ein Paar von Trägern (640, 642) aufweist, die sich vom Grundplattenrahmen (420) in Längsrichtung erstrecken und in einer Querrichtung orthogonal zur Längsrichtung voneinander beabstandet sind, und jeder Träger (640, 642) ein freies Ende (644) hat, das näher am vorderen Ende (107) des Gehäuses (105) angeordnet ist als die wenigstens eine Maschinenkomponente (125) der Windturbine.

11. Gondel nach Anspruch 10, wobei ein Stoßdämpfer (650) an einer äußeren, sich in Längsrichtung erstreckenden Seite (652) jedes der Träger (640, 642) vorgesehen ist, wobei der Stoßdämpfer (650) innerhalb des Gehäuses (105) positioniert und von einer inneren Seitenfläche (664) des Gehäuses (105) beabstandet ist, so dass, wenn das Gehäuse (105) seitlich um einen Abstand verformt wird, der größer als ein vorbestimmter Abstand ist, die Seitenfläche (664) mit dem Stoßdämpfer (650) in Eingriff kommt.

12. Gondel nach Anspruch 11, wobei der Stoßdämpfer (650) einen Körper aus einem Elastomermaterial aufweist, der sich in Längsrichtung entlang wenigstens eines Teils der Länge des jeweiligen Trägers (640, 642) erstreckt.

13. Gondel nach einem der Ansprüche 1 bis 12, wobei die Gondel (100) ein Dach (101), gegenüberliegende Seitenwände (102, 103) und einen Boden (104) aufweist, die zusammengefügt sind, um das längliche Gehäuse (105) zu bilden, wobei jedes von dem Dach (101), den gegenüberliegenden Seitenwänden (102, 103) und dem Boden (104) ein faserverstärktes Polymerverbundmaterial aufweist, wobei die wenigstens eine Maschinenkomponente (125) auf wenigstens einem Träger (254) montiert ist, der einen verstärkten Bereich des Bodens (104), der an den Seitenwänden (102, 103) angebracht ist, einen querverstärkten Innenboden, der an den Seitenwänden (102, 103) angebracht ist, oder eine Querabstützungsbaugruppe, die an den Seitenwänden (102, 103) angebracht ist, aufweist, und dadurch die Maschinenkomponente (125) indirekt an den Seitenwänden (102, 103) des Gehäuses (105) montiert ist, und die Seitenwände (102, 103) des Gehäuses (105) indirekt die Last der Maschinenkomponente (125) tragen.

14. Gondel nach Anspruch 13, wobei die wenigstens eine Maschinenkomponente (125) einen Transformator (158) der Windturbine aufweist, der direkt oder indirekt an den Seitenwänden (102, 103) des Gehäuses (105) an einer Position entlang des Gehäuses (105) montiert ist, die seitlich vom Hauptrahmen (250) beabstandet ist, und die Seitenwände (102, 103) des Gehäuses (105) direkt oder indirekt die Last des Transformators (158) tragen.

15. Gondel nach Anspruch 13 oder Anspruch 14, wobei das Dach (101), die gegenüberliegenden Seitenwände (102, 103) und der Boden (104) zusammengebaut sind, wobei die gegenüberliegenden Seitenwände (102, 103) gegenüberliegende lasttragende Stege des vertikal verschiebbaren Auslegers aufweisen, um eine vertikale Drehmomentlast zu tragen, wobei das Drehmoment um das Montieren des Gehäuses (105) und der wenigstens einen am Gehäuse montierten Maschinenkomponente (125) am Grundplattenrahmen (420) erfolgt, und wenigstens eines oder beide des Dachs (101) und des Bodens (104) einen jeweiligen Flansch aufweisen, der die gegenüberliegenden tragenden Stege des vertikal verschiebbaren Kragträgers miteinander verbindet, und das Dach (101) und der Boden (104) gegenüberliegende tragende Stege eines horizontal verschiebbaren Kragträgers aufweisen, um eine seitliche Last zu tragen, die auf das Gehäuse (105) über das Montieren am Grundplattenrahmen (420) aufgebracht wird, und wenigstens eine oder beide der gegenüberliegenden Seitenwände (102, 103) einen entsprechenden Flansch aufweisen, der die gegenüberliegenden tragenden Stege des horizontal verschiebbaren Kragträgers miteinander verbindet.

## Revendications

1. Nacelle destinée à une éolienne, dans laquelle la nacelle (100) comprend une enveloppe de nacelle formée d'un habitacle allongé (105) qui définit un espace intérieur contenant des composants de machinerie de l'éolienne, l'habitacle (105) comportant une extrémité avant (107) montée sur un mât (122) de l'éolienne, et une extrémité arrière opposée (108), dans laquelle l'habitacle allongé (105) comprend un matériau composite polymère renforcé de fibres,
**caractérisée en ce que** l'extrémité avant (107) de l'habitacle (105) est montée sur un cadre de plaque de base (420) qui est fixé au mât (122), l'extrémité avant (107) s'ajuste au cadre de plaque de base (420) par le biais d'au moins un ensemble raccord (204), un cadre principal (250) est fixé au cadre de plaque de base (420) et s'étend dans une direction longitudinale le long de l'habitacle (105) vers l'extrémité arrière (108), le cadre principal (250) supporte au moins une partie d'un train d'entraînement (124) de l'éolienne, l'habitacle (105) supporte au moins un composant de machinerie (125) de l'éolienne qui est monté sur l'habitacle (105) au niveau de l'extrémité arrière (108), l'habitacle (105) comprend un tube structurel (128) qui fonctionne comme une poutre en porte-à-faux déplaçable verticalement qui porte la charge dudit au moins un composant de machinerie (125) monté dessus, et la nacelle (100) comprend en outre un dispositif de renfort (600) qui est fixé entre le cadre principal (250) et une partie (602) de l'habitacle (105) afin que la partie (602) de l'habitacle (105) se renforce contre un déplacement latéral de l'habitacle (105) par rapport au cadre principal (250).

2. Nacelle selon la revendication 1, dans laquelle le dispositif de renfort (600) est positionné latéralement à distance dudit au moins un ensemble raccord (204) dans la direction longitudinale vers l'extrémité arrière (108).

3. Nacelle selon la revendication 1 ou 2, dans laquelle le dispositif de renfort (600) est flexible dans une direction verticale et est déformé élastiquement lorsque l'habitacle (105) est déplacé verticalement par le biais d'un mouvement vertical de l'extrémité arrière (108) par rapport à l'extrémité avant (107).

4. Nacelle selon l'une quelconque des revendications 1 à 3, dans laquelle le dispositif de renfort (600) est fixé entre le cadre principal (250) et une partie inférieure (602) de l'habitacle (105) afin que la partie inférieure (602) de l'habitacle (105) se renforce contre un déplacement latéral de l'habitacle (105) par rapport au cadre principal (250), et éventuellement dans laquelle le dispositif de renfort (600) est fixé entre le cadre principal (250) et un plancher (104) de l'habitacle (105).

5. Nacelle selon l'une quelconque des revendications précédentes, dans laquelle le dispositif de renfort (600) comprend un longeron allongé (604) qui comprend des extrémités opposées (606, 608) qui sont fixées aux côtés opposés respectifs (610, 612) du cadre principal (250), et une partie centrale (614) qui est fixée au plancher (104) ou au toit (101) de l'habitacle (105).

6. Nacelle selon la revendication 5, dans laquelle le longeron allongé (604) comprend une feuille flexible (605) qui a une résistance à la traction élevée, et ainsi une rigidité élevée, dans une direction parallèle au plan de la feuille (605), et une flexibilité élevée, et ainsi une faible rigidité, dans une direction orthogonale au plan de la feuille (605).

7. Nacelle selon la revendication 5 ou 6, dans laquelle des première et deuxième parties intermédiaires (620a, 620b) du longeron allongé (604) sont situées entre la partie centrale (614) et l'une respective des extrémités opposées (606, 608), et chaque partie intermédiaire (620a, 620b) est flexible dans une direction verticale et se déforme élastiquement lorsque l'habitacle (105) est déplacé verticalement par le biais d'un mouvement vertical de l'extrémité arrière (108) par rapport à l'extrémité avant (107).

8. Nacelle selon l'une quelconque des revendications 5 à 7, dans laquelle le longeron allongé (604) comprend un matériau composite polymère renforcé de fibres.

9. Nacelle selon l'une quelconque des revendications 5 à 8, dans laquelle le dispositif de renfort (600) comprend une paire desdits longerons allongés (604a, 604b) qui sont espacés l'un de l'autre dans la direction longitudinale.

10. Nacelle selon l'une quelconque des revendications 1 à 9, dans laquelle le cadre principal (250) comprend une paire de poutres (640, 642) qui s'étendent depuis le cadre de plaque de base (420) dans la direction longitudinale et sont espacées l'une de l'autre dans une direction transversale orthogonale à la direction longitudinale, et chaque poutre (640, 642) comprend une extrémité libre (644) qui est située plus près de l'extrémité avant (107) de l'habitacle (105) que ledit au moins un composant de machinerie (125) de l'éolienne.

11. Nacelle selon la revendication 10, dans laquelle un amortisseur de chocs (650) est prévu sur un côté externe s'étendant longitudinalement (652) de chacune des poutres (640, 642), l'amortisseur de chocs (650) étant positionné vers l'intérieur de l'habitacle (105) et espacé d'une surface latérale interne (664) de l'habitacle (105) de telle sorte que, lorsque l'habitacle (105) est déformé latéralement d'une distance supérieure à une distance prédéterminée, la surface latérale (664) entre en prise avec l'amortisseur de chocs (650).

12. Nacelle selon la revendication 11, dans laquelle l'amortisseur de chocs (650) comprend un corps d'un matériau élastomère qui s'étend longitudinalement le long d'au moins une partie de la longueur de la poutre respective (640, 642).

13. Nacelle selon l'une quelconque des revendications 1 à 12, dans laquelle la nacelle (100) comprend un toit (101), des parois latérales opposées (102, 103) et un plancher (104) assemblés entre eux afin de former l'habitacle allongé (105), dans laquelle chacun parmi le toit (101), les parois latérales opposées (102, 103) et le plancher (104) comprend un matériau composite polymère renforcé de fibres, dans laquelle ledit au moins l'un dudit composant de machinerie (125) est monté sur au moins un support (254) comprenant une zone renforcée du plancher (104) qui s'ajuste aux parois latérales (102, 103), un plancher transversal intérieur renforcé qui s'ajuste aux parois latérales (102, 103) ou un ensemble support transversal qui s'ajuste aux parois latérales (102, 103), et ainsi ledit composant de machinerie (125) est monté indirectement sur les parois latérales (102, 103) de l'habitacle (105) et les parois latérales (102, 103) de l'habitacle (105) supportent indirectement la charge dudit composant de machinerie (125).

14. Nacelle selon la revendication 13, dans laquelle ledit au moins un composant de machinerie (125) comprend un transformateur (158) de l'éolienne qui est monté directement ou indirectement sur les parois latérales (102, 103) de l'habitacle (105) à un emplacement le long de l'habitacle (105) qui est espacé latéralement du cadre principal (250), et les parois latérales (102, 103) de l'habitacle (105) supportent directement ou indirectement la charge du transformateur (158).

15. Nacelle selon la revendication 13 ou 14, dans laquelle le toit (101), les parois latérales opposées (102, 103) et le plancher (104) sont assemblés moyennant quoi les parois latérales opposées (102, 103) comprennent des âmes porteuses opposées de la poutre en porte-à-faux déplaçable verticalement afin de porter une charge de moment de rotation vertical, le moment de rotation étant autour du montage sur le cadre de plaque de base (420), de l'habitacle (105) et dudit au moins un composant de machinerie (125) monté sur l'habitacle, et au moins l'un ou les deux parmi le toit (101) et le plancher (104) comprennent une semelle respective qui relie les âmes porteuses opposées de la poutre en porte-à-faux déplaçable verticalement, et le toit (101) et le plancher (104) comprennent des âmes porteuses opposées d'une poutre en porte-à-faux déplaçable horizontalement afin de porter une charge latérale appliquée à l'habitacle (105) autour du montage sur le cadre de plaque de base (420), et au moins l'un ou les deux parmi les parois latérales opposées (102, 103) comprennent une semelle respective reliant les âmes porteuses opposées de la poutre en porte-à-faux déplaçable horizontalement.
